# EUROPEAN PATENT SPECIFICATION

(11) **EP 0 393 333 B1**
(45) Date of publication and mention of the grant of the patent: **14.08.1996**
(21) Application number: 90103876.0
(22) Date of filing: 28.02.1990
(51) Int. Cl.: H04M 3/18

(54) **Telephone lines overvoltage protection circuit**
Überspannungsschutzschaltung für Fernmeldeleitungen
Circuit de protection contre les surtensions pour lignes téléphoniques

(30) Priority: 20.04.1989 US 341771; 26.09.1989 US 412925
(43) Date of publication of application: 24.10.1990
(73) Proprietor: ONEAC CORPORATION, Libertyville Illinois 60048 (US)
(72) Inventor: McCartney, Thomas, Bannockburn, Illinois 60015 (US); Lace, Melvin Arthur, Prospect Heights Illinois 60070 (US)
(74) Representative: Bauer, Robert, Dipl.-Ing.

(56) References cited:
- EP-A- 0 162 228
- EP-A- 0 209 973
- EP-A- 0 260 839
- US-A- 3 725 613
- US-A- 4 389 695

## Description

This invention relates to an overvoltage protection circuit used with a pair of telephone lines, that are both separate from ground, and comprising the features of the precharacterizing portion of claim 1.

A protection circuit of this kind is disclosed in US-A-4,758,920. In addition to the clamping of hazardous voltages exceeding a rated potential above the ring signal peak voltage it is effective also for filtering noise and transient voltage signals occuring below this standard clamping voltage potential. However, while normal mode overvoltage signals can thus be eliminated, the circuit can produce a differential current flow in the lines in response to common mode induced voltages of the same phase and amplitude on both lines and such differential current flow, that can result from a common mode dynamic unbalance in the protection circuitry, can cause an audible hum.

The invention as claimed, therefore, aims at avoiding any common mode dynamic unbalance differential current flow in the lines in response to common mode induced voltages, yet maintaining the advantages of the overvoltage protection circuit of US-A-4,758,920.

EP-A-0 260 839 and EP-A-0 209 973 disclose protection circuits arranged to prevent common mode current which exceeds a threshold value from flowing between the lines.

In the invention the transient voltage suppressor device having the breakdown voltage rating specified in Claim 1 remains in the non-conductive state and thus prevents any current flow between the lines in the case of any common mode signals being present on the lines.

In the following, examples of the protection circuit as claimed are described in detail in connection with the attached drawings wherein
Fig. 1 is an electrical schematic representation of a first overvoltage protection circuit arranged in accordance with the principles of the invention, including an alternative, and
Figs. 2 - 9 are electrical schematic representations of further alternative overvoltage protection circuits according to the invention.

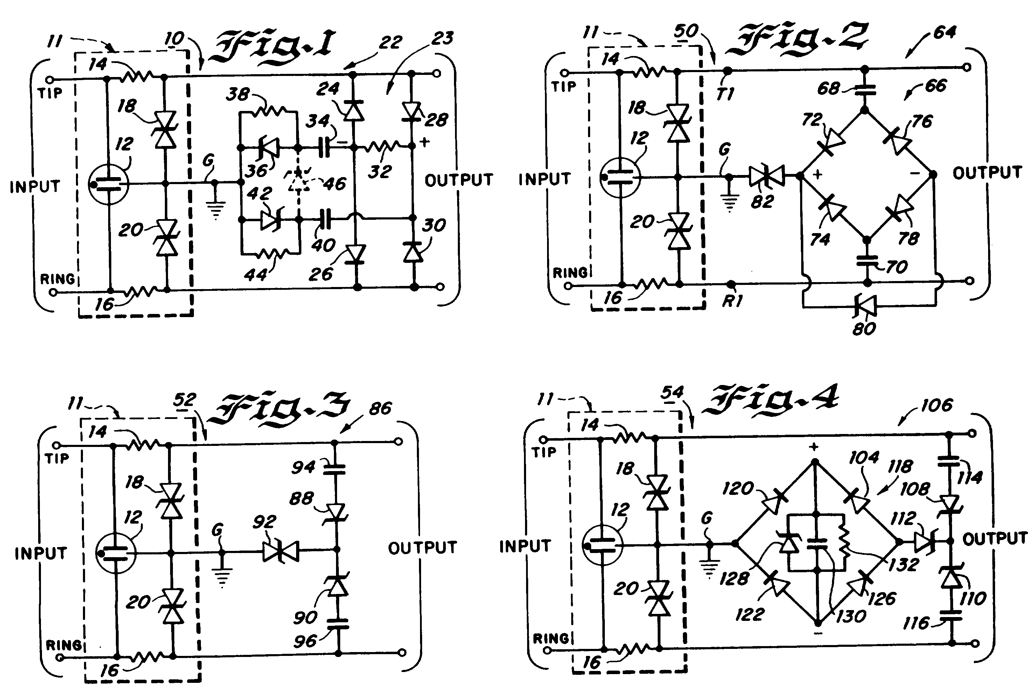

Referring now to Fig. 1, there is illustrated an overvoltage protection circuit for telephone lines according to the invention generally designated by the reference numeral 10. At its INPUT, the overvoltage protection circuit 10 is connected to a pair of lines or TIP and RING conductors of a telephone system. One of various types of telephone equipment, such as, central office telephone equipment, a telephone signal repeater, or a subscriber's station, for example, a modem or telephone set is connected to the OUTPUT of the circuit 10.

Shown enclosed in dotted line of the overvoltage protection circuit 10 is first circuitry generally designated by the reference numeral 11 for clamping voltage signals on the TIP and RING conductors at a first predetermined voltage potential above the conventional ring signal. Voltage clamping circuitry 11 includes a gas discharge tube 12 or similar device that is connected between the TIP and RING conductors and to ground potential at ground line G. A resistor 14 is connected in series with the TIP line and a resistor 16 is connected in series with the RING line. A transient voltage suppressor 18 is connected between the resistor 14 and ground potential and a transient voltage suppressor 20 is connected between the resistor 16 and ground potential.

Voltage clamping circuitry 11 is effective for protecting the telephone equipment connected to the OUTPUT of circuit 10 from hazardous voltages, for example, due to lightning and power surges. The gas discharge tube 12 clamps transient voltages that appear both across the TIP and RING conductors with respect to the ground line G and provides a high impedance to the ground line G when a high voltage transient is not present. The transient voltage suppressors 18 and 20 conduct whenever the voltage potential applied to the TIP and RING lines, respectively, exceeds a predetermined breakdown voltage potential selected above the typical 170 volts AC ring signal, such as, for example 200 volts. Resistors 14 and 16 limit current to the transient voltage suppressors 18 and 20.

A three electrode gas discharge tube device such as, a Milli-Triac part number MLT0090, rated for a breakdown voltage of 600 volts, manufactured by Reynolds Industries may be employed for the gas discharge tube 12. Transient voltage suppressors of a type manufactured and sold by General Semiconductor Industries, Inc., a Square D Company under a registered trademark TransZorb, such as part number 1N6303A or 1.5KE250C rated for a reverse standoff voltage without conduction at 202 volts and for a breakdown voltage in a range between 225-275 volts, advantageously may be employed for suppressors 18 and 20.

Overvoltage protection circuit 10 includes second voltage clamping circuitry designated generally by the reference numeral 22 for clamping voltage signals on the TIP and RING conductors having a predefined threshold rate of change and at a second predetermined voltage potential above the voice and data signal level and substantially less than the typical ring 170 volts AC ring signal. Voltage clamping circuitry 22 is effective for filtering noise and transient voltage signals occurring below the selected operational voltage of the circuitry 11 and above a predefined threshold rate of change with respect to time above the frequency of the ring signal. Voltage clamping circuitry 22 has a voltage amplitude and frequency response for effectively protecting against transient and noise signals substantially without interfering with the conventional telephone signals. Voltage clamping circuitry 22 provides a common mode voltage signal window by substantially eliminating common mode current flow between the telephone lines so that common mode induced voltages do not produce audible sound in the subscriber's station.

Voltage clamping circuitry 22 includes a diode bridge arrangement 23 of diodes 24, 26, 28 and 30 connected between the resistors 14 and 16 series connected with the TIP and RING conductors. A resistor 32 is connected across the center terminals + and - of diode bridge 23. A capacitor 34 is connected to the junction of the diode bridge - center terminal and resistor 32 and is connected in series with a unipolar voltage suppressor 36 to ground line G. A biasing resistor 38 is connected in parallel with the voltage suppressor 36. A capacitor 40 is connected to the junction of the diode bridge + center terminal and resistor 32 and is connected in series with a unipolar voltage suppressor 42 to ground line G. A biasing resistor 44 is connected in parallel with the voltage suppressor 42.

Various commercially available devices can be used for diodes 24, 26, 28 and 30, such as, for example, a device MDA204G manufactured and sold by Motorola Inc. Voltage suppressors 36 and 42 are selected to have a breakdown voltage rating above the voice and data signals carried by the TIP and RING conductors, such as, for example, in a range between 5 and 10 volts. For example, a device type 1N6269 sold by various manufacturers or General Semiconductor Industries, Inc. part number 1.5KE8.2 and having a breakdown voltage rating of 8.2 volts can be used for unipolar voltage suppressors 36 and 42. The effective frequency response of the overvoltage clamping circuitry 22 for voltage signals above the rated breakdown voltage is determined by the component values of the resistors 14 and 16 and capacitors 34 and 40. Capacitors 34 and 40 may be provided in a range between 0.1 and 1 microfarad with resistors 14 and 16 selected in a range between 10 and 30 ohms. For example, 0.68 microfarad capacitors 34 and 40 can be used with 15 ohm resistors 14 and 16. A high value such as, for example, 10 megohms, is used for resistors 38 and 44 providing a discharge path to ground for capacitors 34 and 40. Similarly a high impedance value such as, for example, 2.2 megohms, is used for resistor 32 providing a discharge path for capacitors 34 and 40.

In operation, positive transient voltage signals on the TIP and RING conductors that exceed both the threshold frequency and the second predetermined voltage potential are coupled via diodes 28 and 30, respectively, capacitor 40 and suppressor 42 to ground. Similarly, negative transient voltage signals on the TIP and RING conductors are coupled via diodes 24 and 26, respectively, capacitor 34 and suppressor 36 to ground. The frequency response of circuit 22 allows the typical 170 volt, low frequency AC ring signal to pass to the subscriber station substantially unaffected. Voice and data signals likewise are substantially unaffected by the overvoltage clamping circuit 22 having an effective impedance of the series impedance of the diodes 24, 26, 28 and 30, capacitors 34 and 40 and the respective parallel combination of the suppressor 36 and resistor 38 and the suppressor 42 and resistor 44.

A common mode voltage signal window is provided by the substantially instantaneous charging of the capacitors 34 and 40 to particular levels determined by the amplitude of the common mode voltage signals on the lines so that the suppressors 36 and 42 are disposed in a non-conductive state. As a result, common mode current flow between the telephone lines is avoided so that common mode induced voltages do not produce audible sound in the subscriber's station.

As an alternative arrangement, a third unipolar voltage suppressor 46 shown in dotted line can be connected between the anode of suppressor 42 and the cathode of suppressor 36 providing voltage clamping therebetween. An identical device type 1N6269 having a breakdown voltage rating of 8.2 volts as used for unipolar voltage suppressors 36 and 42 can be employed for the unipolar voltage suppressor 46.

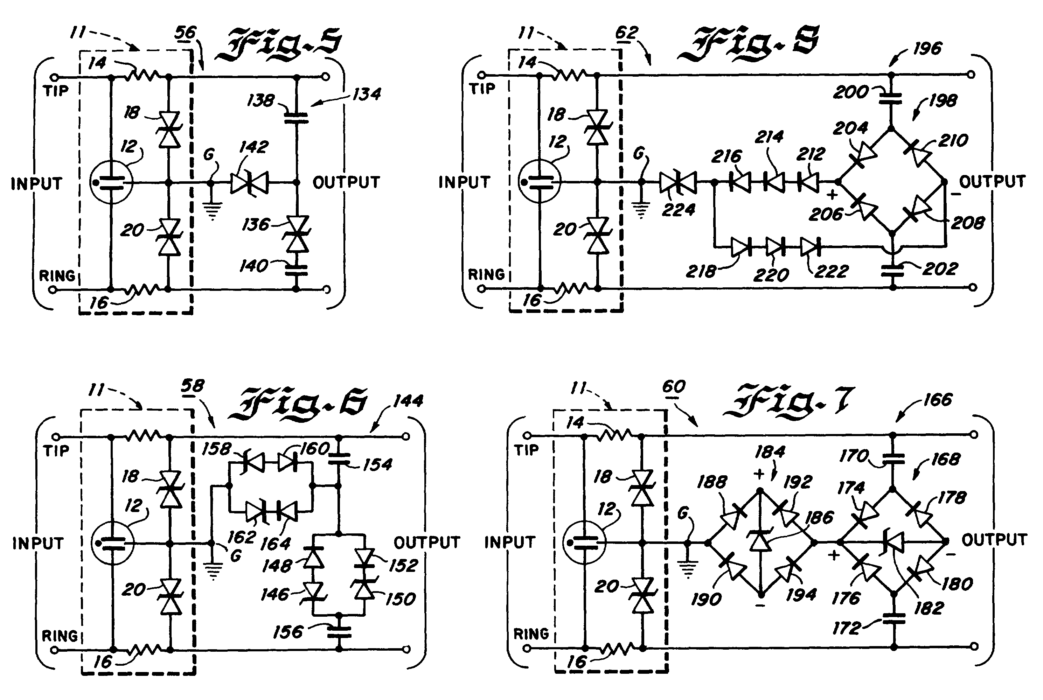

FIGS. 2-8 illustrate alternative embodiments of overvoltage protection circuits according to the invention generally designated by the reference numerals 50, 52, 54, 56, 58, 60 and 62. The same reference numerals are used for similar circuitry and components of FIG. 1. Each of the overvoltage protection circuits 50, 52, 54 56, 58, 60 and 62 includes the first overvoltage protection circuitry 11 and an alternative second voltage clamping circuitry that replaces and performs similar functions of the voltage clamping circuitry 22.

Referring now to FIG. 2, the overvoltage protection circuit 50 includes an alternative second voltage clamping circuitry generally designated by the reference numeral 64. Voltage clamping circuitry 64 includes a diode bridge 66 coupled via a pair of capacitors 68 and 70 between the resistors 14 and 16 series connected with the TIP and RING conductors. Diode bridge 66 includes diodes 72, 74, 76 and 78 and can be provided with the same device type as used for diodes 24, 26, 28 and 30. The effective frequency response of the overvoltage clamping circuitry 64 for voltage signals above the rated breakdown voltage is determined by the component values of the resistors 14 and 16 and capacitors 68 and 70. Capacitors 68 and 70 have a similar value as used for capacitor 34 and 40 of FIG. 1.

A unipolar voltage suppressor 80 is connected across the center terminals + and - of diode bridge 66. A bidirectional voltage suppressor 82 is connected in series between the center terminal + of diode bridge 66 and ground G. An identical device type 1N6269 having a breakdown voltage rating of 8.2 volts as used for unipolar voltage suppressors 36 and 42 in FIG. 1 can be employed for the unipolar voltage suppressor 80. A similar device as used for suppressors 18 and 20 having a reverse breakdown voltage rating above the peak common mode voltage signal, such as in a range between 20 volts and 68 volts can be used for bidirectional voltage suppressor 82. For example, a device type 1N6282 sold by various manufacturers or General Semiconductor Industries, Inc. part number 1.5KE39C and having a breakdown voltage rating of 40 volts can be used for bidirectional voltage suppressor 82.

In operation, positive transient voltage signals above the threshold frequency and the second predetermined voltage potential on the TIP and RING conductors are coupled via capacitors 68 and 70, diodes 72 and 74 and suppressor 82 to ground. Similarly, negative transient voltage signals above the threshold second predetermined voltage potential on the TIP and RING conductors are coupled via capacitors 68 and 70, diodes 76 and 78 and suppressors 80 and 82 to ground.

Voltage clamping circuitry 64 provides a common mode voltage signal window by the operation of the bidirectional suppressor 82. Suppressor 82 is disposed in a non-conductive state with common mode voltage signals on the lines so that common mode current flow is eliminated between the telephone lines and common mode induced voltages do not produce audible sound in the subscriber's station.

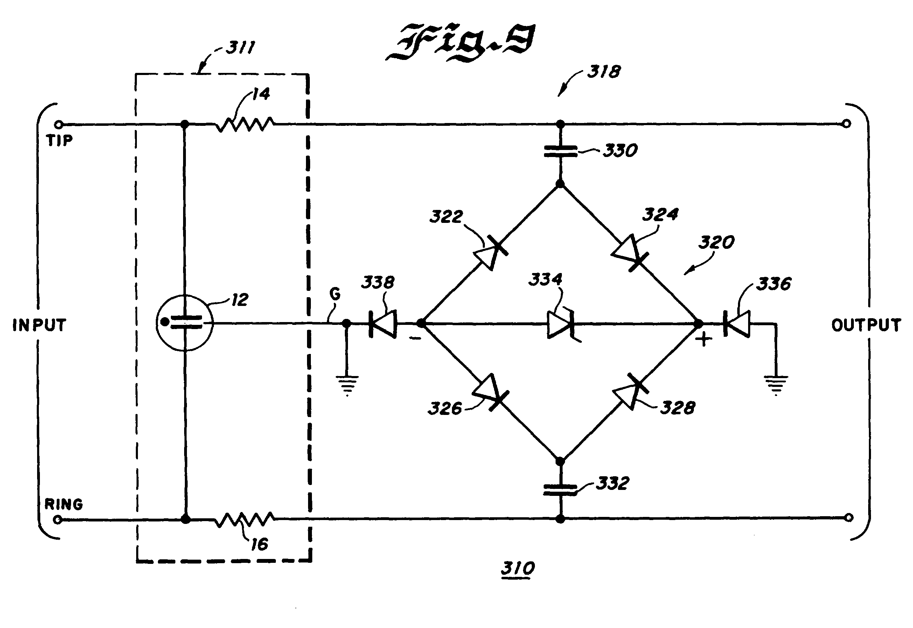

Referring now to FIG. 3, the overvoltage protection circuit 52 includes an alternative second voltage clamping circuitry generally designated by the reference numeral 86. Voltage clamping circuitry 86 includes a star arrangement of a pair of unipolar transient voltage suppressors 88 and 90 and a bidirectional voltage suppressor 92. The anode of suppressor 88 is connected to the OUTPUT end of the TIP conductor by a capacitor 94. Similarly, a capacitor 96 connects the suppressor 90 to the RING conductor.

An identical device type 1N6269 having a breakdown voltage rating of 8.2 volts as used for unipolar voltage suppressors 36 and 42 in FIG. 1 can be employed for the unipolar voltage suppressors 88 and 90. A bidirectional suppressor device having a reverse breakdown voltage rating above the peak common mode voltage signal, such as in a range between 20 and 68 volts is used for bidirectional voltage suppressor 92. An identical device type 1N6282 having a breakdown voltage rating of 40 volts as used for bidirectional voltage suppressor 82 can be employed for the bidirectional voltage suppressors 92.

The effective frequency response of the overvoltage clamping circuitry 86 for voltage signals above the rated breakdown voltage of suppressors 88, 90 and 92 is determined by the component values of the resistors 14 and 16 and capacitors 94 and 96. Capacitors 94 and 96 have a similar value as used for capacitor 34 and 40 of FIG. 1.

Voltage clamping circuitry 86 provides a common mode voltage signal window by the operation of the bidirectional suppressor 92. Suppressor 92 is disposed in a non-conductive state with common mode voltage signals on the lines so that common mode current flow is eliminated between the telephone lines and common mode induced voltages do not produce audible sound in the subscriber's station.

Referring now to FIG. 4, the overvoltage protection circuit 54 includes an alternative second voltage clamping circuitry generally designated by the reference numeral 106. Voltage clamping circuitry 106 includes a star arrangement of unipolar transient voltage suppressors 108, 110 and 112 coupled via a pair of capacitors 114 and 116 between the resistors 14 and 16 series connected with the TIP and RING conductors. A diode bridge arrangement 118 of diodes 120, 122, 124 and 126 is connected between the cathode of suppressor 112 and ground G. A unipolar voltage suppressor 128, a capacitor 130 and a resistor 132 are connected in parallel across the center terminals + and - of diode bridge 118.

An identical device type 1N6269 having a breakdown voltage rating of 8.2 volts as used for unipolar voltage suppressors 36 and 42 can be employed for unipolar voltage suppressors 108, 110 and 112. Unipolar voltage suppressor 128 limits the voltage charging level across the capacitor 130 and is selected to have a breakdown voltage rating in a range between 20 volts and 68 volts. A similar unipolar device type 1N6282 having a breakdown voltage rating of 40 volts as used for bidirectional voltage suppressor 82 can be employed for the unipolar voltage suppressors 128.

The effective frequency response of the overvoltage clamping circuitry 106 for voltage signals above the rated breakdown voltage of suppressor 108 and 110 is determined by the component values of the resistors 14 and 16 and capacitors 114 and 116. Capacitors 114 and 116 have a similar value as used for capacitor 34 and 40 of FIG. 1.

In the alternative second voltage clamping circuitry 106, the voltage suppressors 108 and 110 provide a high impedance below the second clamping voltage or 8.2 volts. Voltage clamping circuitry 106 provides a common mode voltage signal window by the operation of the parallel connected capacitor 130 and suppressor 128 via the diode bridge 118.

Referring now to FIG. 5, the overvoltage protection circuit 56 includes an alternative second voltage clamping circuitry generally designated by the reference numeral 134. Voltage clamping circuitry 134 includes a bidirectional voltage suppressor 136 coupled via a pair of capacitors 138 and 140 between the resistors 14 and 16 series connected with the TIP and RING conductors. A second bidirectional voltage suppressor 142 is connected between the junction of the the bidirectional voltage suppressor 136 and the capacitors 138 and ground G. Alternatively, the second bidirectional voltage suppressor 142 can connected between the junction of the the bidirectional voltage suppressor 136 and the capacitors 140 and ground G. Voltage clamping circuitry 134 provides a common mode voltage signal window by the operation of the bidirectional suppressor 142.

A similar bidirectional suppressor device type 1N6269 having a breakdown voltage rating of 8.2 volts as used for unipolar voltage suppressors 36 and 42 can be employed for the bidirectional voltage suppressors 136. The bidirectional suppressor device 138 has a reverse breakdown voltage rating above the peak common mode voltage signal, such as in a range between 20 and 68 volts. An identical bidirectional device type 1N6282 having a breakdown voltage rating of 40 volts as used for bidirectional voltage suppressor 82 can be employed for the bidirectional voltage suppressor 142.

Referring now to FIG. 6, the overvoltage protection circuit 58 includes an alternative second voltage clamping circuitry generally designated by the reference numeral 144. Voltage clamping circuitry 144 includes a parallel combination of a first unipolar voltage suppressor 146 connected in series with an oppositely poled diode 148 and a second unipolar voltage suppressor 150 connected in series with an oppositely poled diode 152. The parallel combination of suppressors 146, 150 and diodes 148, 152 is coupled via a pair of capacitors 154 and 156 between the resistors 14 and 16 series connected with the TIP and RING conductors. The suppressors 146, 150 and diodes 148, 152 provides equivalent functions as the bidirectional voltage suppressor 136 of FIG. 5 with an advantage of providing a lower capacitance than suppressor 136. A second low capacitance bidirectional common mode window suppressor function of the bidirectional suppressor 142 of FIG. 5 is provided by a parallel combination of a first unipolar voltage suppressor 158 connected in series with an oppositely poled diode 160 and a second unipolar voltage suppressor 162 connected in series with an oppositely poled diode 164.

An identical device type 1N6269 having a breakdown voltage rating of 8.2 volts as used for unipolar voltage suppressors 36 and 42 of FIG. 1 can be employed for unipolar voltage suppressors 146 and 150. An identical unipolar device type 1N6282 having a breakdown voltage rating of 40 volts as used for the unipolar voltage suppressor 128 of FIG. 4 can be employed for the unipolar voltage suppressors 158 and 162. Diodes 148, 152, 160 and 164 and can be provided with an identical device type as used for diodes forming bridge 23 of FIG. 1.

Referring now to FIG. 7, the overvoltage protection circuit 60 includes an alternative second voltage clamping circuitry generally designated by the reference numeral 166. Voltage clamping circuitry 166 includes a diode bridge 168 coupled via a pair of capacitors 170 and 172 between the resistors 14 and 16 series connected with the TIP and RING conductors. Diode bridge 168 includes diodes 174, 176, 178 and 180 and can be provided with an identical device type as used for diodes forming bridge 23 of FIG. 1. A unipolar voltage suppressor 182 is connected across the center terminals + and - of diode bridge 168. A second diode bridge 184 with a second unipolar voltage suppressor 186 connected across the center terminals + and - of diode bridge is connected in series between the center terminal + of diode bridge 168 and ground G. Diode bridge 184 includes diodes 188, 190, 192 and 194 and can be provided with an identical device type as used for diodes forming bridge 23 of FIG. 1.

An identical device type 1N6269 having a breakdown voltage rating of 8.2 volts as used for unipolar voltage suppressor 80 of FIG. 2 can be employed for unipolar voltage suppressor 182. An identical unipolar device type 1N6282 having a breakdown voltage rating of 40 volts as used for the unipolar voltage suppressor 128 of FIG. 4 can be employed for the unipolar voltage suppressor 186.

Referring now to FIG. 8, the overvoltage protection circuit 62 includes an alternative second voltage clamping circuitry generally designated by the reference numeral 196. Voltage clamping circuitry 196 includes a diode bridge 198 coupled via a pair of capacitors 200 and 202 between the resistors 14 and 16 series connected with the TIP and RING conductors. Diode bridge 198 includes diodes 204, 206, 208 and 210 and can be provided with an identical device type as used for diodes forming bridge 23 of FIG. 1. Instead of the unipolar voltage suppressor 182 of FIG. 7, a plurality of diodes 212, 214, 216, 218, 220 and 222 are connected in series across the center terminals + and - of diode bridge 198. A bidirectional voltage suppressor 224 is connected between the junction of the series connected diodes 216 and 218 and ground G.

The bidirectional suppressor device 224 has a reverse breakdown voltage rating above the peak common mode voltage signal, such as in a range between 20 and 68 volts. An identical bidirectional device type 1N6282 having a breakdown voltage rating of 40 volts as used for bidirectional voltage suppressor 82 of FIG. 2 can be employed for the bidirectional voltage suppressor 224.

In the voltage clamping circuit 11 of FIGS. 1-8, the gas discharge tube 12 can be omitted. In addition, the voltage clamping circuit 11 can be provided without the bidirectional transient voltage suppressors 18 and 20. It should be understood that the gas discharge tube 12 and suppressors 18 and 20 can be eliminated and the protection circuits 10, 50, 52, 54, 56, 58, 60 and 62 remain effective for suppressing noise and transient voltage signals.

Referring now to FIG. 9, there is illustrated another overvoltage protection circuit for telephone lines according to the invention generally designated by the reference numeral 310. Overvoltage protection circuit 310 includes first circuitry generally designated by the reference numeral 311 for clamping voltage signals on the TIP and RING conductors at a first predetermined voltage potential above the conventional ring signal. Voltage clamping circuitry 311 includes a gas discharge tube 12 or similar device that is connected between the TIP and RING conductors and to ground potential at ground line G and a pair of resistors 14 and 16 as shown and described with respect to FIGS. 1-8. Resistors 14 and 16 limit current to second voltage clamping circuitry generally designated by the reference numeral 318.

Voltage clamping circuitry 318 of the overvoltage protection circuit 310 is effective for clamping voltage signals on the TIP and RING conductors having a predefined threshold rate of change and at a second predetermined voltage potential above the voice and data signal level and substantially less than the typical ring 170 volts AC ring signal. Voltage clamping circuitry 318 is effective for filtering noise and transient voltage signals occurring below the selected operational voltage of the circuitry 311 and above a predefined threshold rate of change with respect to time above the frequency of the ring signal. Voltage clamping circuitry 318 has a voltage amplitude and frequency response for effectively protecting against transient and noise signals substantially without interfering with the conventional telephone signals. Voltage clamping circuitry 318 provides common mode voltage signal rejection by substantially eliminating common mode current flow from the telephone lines so that common mode induced voltages do not produce audible sound in the subscriber's station.

Voltage clamping circuitry 318 includes a diode bridge arrangement 320 of a plurality of diodes 322, 324, 326 and 328 connected via a pair of capacitors 330 and 332 between the resistors 14 and 16 series connected with the TIP and RING conductors. A unidirectional transient voltage suppressor 334 is connected across the center terminals + and - of diode bridge 320. The cathode of the unidirectional transient voltage suppressor 334 is connected to the + center terminal and its anode is connected to the - center terminal of bridge 320. A first diode 336 and a second diode 338 is connected to the center terminals + and - of diode bridge 320, respectively. Diodes 336 and 338 are oppositely poled with respect to the unidirectional transient voltage suppressor 334. The cathode of diode 336 is connected to the + center terminal of bridge 320 and the anode is connected to ground potential. The anode of diode 336 is connected to the - center terminal of bridge 320 and the cathode is connected to ground potential.

Each of the diodes 322, 324, 326, 328, 336 and 338 is preferably a fast switching diode. Various commercially available devices can be used for diodes 322, 324, 326, 328, 336 and 338, such as, for example, a device MDA204G manufactured and sold by Motorola Inc. Unidirectional transient voltage suppressor 334 is preferably a fast semiconductor voltage clamping device. The current-voltage characteristic of the transient voltage suppressor 334 is preferably similar to that of a zener diode, clamping at a predetermined rated voltage in one direction and having a forward diode characteristic in the other direction. Voltage suppressor 334 is selected to have a breakdown voltage rating above the voice and data signals carried by the TIP and RING conductors and above the peak common mode voltage signals, such as, for example, in a range between 8.2 volts and 60 volts. For example, a device type 1N6283 sold by various manufacturers or General Semiconductor Industries, Inc. part number 1.5KE33 and having a breakdown voltage rating of 33 volts can be used for unidirectional voltage suppressor 334.

The effective frequency response of the overvoltage clamping circuitry 318 for voltage signals that sufficiently exceed the rated breakdown voltage of suppressor 334 is determined by the component values of the resistors 14 and 16 and capacitors 330 and 332. Capacitors 330 and 332 may be provided in a range between 0.1 and 1 microfarad with resistors 14 and 16 selected in a range between 10 and 30 ohms. For example, 0.68 microfarad capacitors 330 and 332 can be used with 15 ohm resistors 14 and 16.

In operation, positive transient voltage signals on the TIP and RING conductors that exceed both the threshold frequency and the second predetermined voltage potential are coupled via capacitors 330 and 332, diodes 324 and 328, respectively, suppressor 334 and diode 338 to ground. Similarly, negative transient voltage signals on the TIP and RING conductors are coupled via capacitors 330 and 332, diodes 322 and 326, respectively, suppressor 334 and diode 336 to ground. The frequency response of circuit 18 allows the typical 170 volt, low frequency AC ring signal to pass to the subscriber station substantially unaffected. Voice and data signals likewise are substantially unaffected by the overvoltage clamping circuit 318 having an effective impedance of the series impedance of capacitors 330 and 332, the diodes 322, 324, 326, and 328, and the respective series combination of the suppressor 334 and diode 336 and 338.

Voltage clamping circuitry 318 provides a common mode voltage signal window by the operation of the unidirectional suppressor 334. The unidirectional suppressor 334 has a reverse breakdown voltage rating above the peak common mode voltage signal. Suppressor 334 is disposed in a non-conductive state with common mode voltage signals on the lines so that common mode current flow is eliminated between the telephone lines and common mode induced voltages do not produce audible sound in the telephone equipment.

It should be understood that in the overvoltage protection circuit 310, a bidirectional transient voltage suppressor device, for example, such as, formed by a pair of back-to-back unidirectional suppressors or a varistor, can be used for the suppressor 334.

## Claims

1. An overvoltage protection circuit used with a pair of telephone lines, comprising:
first voltage clamping means (11; 311) for clamping voltage signals on said lines at a first predetermined voltage potential above the ring signal voltage level,
second voltage clamping means (22; 64; 86; 106; 134; 144; 166; 196; 318) for clamping voltage signals on said lines at a second predetermined voltage potential above the voice and data signal voltage level yet below the ring signal voltage level, and
filter means (e.g. 14, 34; 16, 40) in combination with said second voltage clamping means for filtering noise and transient signals from said voltage signals only when said voltage signals exceed said second predetermined voltage potential and have a rate of change with respect to time above that one of the AC ring signal,
said second voltage clamping means including at least one transient voltage suppressor device (36, 42; 46; 80, 82; 92; 128; 142; 158, 160, 162, 164; 182; 224; 334) coupled between a connection between said lines and ground,
**characterized** in that said at least one transient voltage suppressor device has a breakdown voltage rating above an expected peak value of common mode voltage signals on said lines and is arranged to remain in the non-conductive state with any common mode voltage signals being present on said lines for blocking common mode current flow between said lines.

2. An overvoltage protection circuit as recited in claim 1 wherein said first voltage clamping means includes a gas discharge tube (12).

3. An overvoltage protection circuit as recited in claim 1 wherein said first voltage clamping means includes a pair of bidirectional semiconductor transient voltage suppressor devices (18 and 20) connected across said lines.

4. An overvoltage protection circuit as recited in claim 1 wherein said filter means include a pair of resistors (14 and 16) and a pair of capacitors (34 and 40), one of said resistors connected in series with a respective one of said lines, one of said capacitors coupled between a respective one of said resistors and ground.

5. An overvoltage protection circuit as recited in claim 1 wherein said second voltage clamping means include a diode bridge (23) coupled to said lines, a pair of transient voltage suppressor devices (36 and 42), said transient voltage suppressor devices coupled between a first and second center connection of said diode bridge and ground, and said filter means include resistance means (14 and 16) connected in series between said lines and said diode bridge, and capacitance means (34 and 40) connected between said transient voltage suppressor devices and said diode bridge center connections.

6. An overvoltage protection circuit as recited in claim 5 wherein said transient voltage suppressor devices (36 and 42) comprise unidirectional semiconductor devices.

7. An overvoltage protection circuit as recited in claim 5 wherein said second voltage clamping means further include high impedance means (38 and 44) connected in parallel with said transient voltage suppressor devices.

8. An overvoltage protection circuit as recited in claim 1 wherein said second voltage clamping means include a diode bridge (66) coupled between said lines, a first transient voltage suppressor device (80) coupled between a first and second center connection of said diode bridge, a second voltage suppressor device (82) connected between the second center connection of said diode bridge and ground, and said filter means include resistance means (14 and 16) connected in series with said lines and capacitance means (68 and 70) connected between a respective one of said resistance means and said diode bridge.

9. An overvoltage protection circuit as recited in claim 8 wherein said second transient voltage suppressor device (82) has a reverse breakdown voltage above a peak value of common mode voltage signals on said lines.

10. An overvoltage protection circuit as recited in claim 8 wherein said first transient voltage suppressor device (80) is a unipolar transient voltage suppressor device formed by a plurality of series connected diodes (212, 214, 216, 218, 220, 222) and said second transient voltage suppressor device (82) is a bidirectional transient voltage suppressor device (224).

11. An overvoltage protection circuit as recited in claim 1 wherein said second voltage clamping means include first and second transient voltage suppressor devices (88 and 90 or 108 and 110) coupled between said lines and a third transient voltage suppressor device (92 or 112) connected between a junction of said first and second transient voltage suppressor devices and ground, and said filter means include resistance means (14 and 16) connected in series with said lines and capacitance means (94 and 96 or 114 and 116) connected between a respective one of said resistance means and said first and second transient voltage suppressors.

12. An overvoltage protection circuit as recited in claim 11 wherein said first and second transient voltage suppressor devices (88 and 90 or 108 and 110) comprise unidirectional semiconductor devices and third transient voltage suppressor device (92) comprises a bidirectional semiconductor device.

13. An overvoltage protection circuit as recited in claim 11 wherein said third transient voltage suppressor device (92) has a reverse breakdown voltage above a peak value of common mode voltage signals on said lines.

14. An overvoltage protection circuit as recited in claim 1 wherein said second voltage clamping means include first and second transient voltage suppressor devices (108 and 110) coupled between said lines and a third transient voltage suppressor device (112) connected to a junction of said first and second transient voltage suppressor devices, a diode bridge (118) connected between said third transient voltage suppressor device and ground, a fourth transient voltage suppressor device (128) connected across first and second diode bridge center connections; and said filter means include resistance means (14 and 16) connected in series with said lines and capacitance means (114 and 116) connected between said resistance means and said first and second transient voltage suppressor devices.

15. An overvoltage protection circuit as recited in claim 14 wherein said second voltage clamping means further include a capacitor (130) connected in parallel across said fourth transient voltage suppressor device (128).

16. An overvoltage protection circuit as recited in claim 14 wherein said second voltage clamping means further include high impedance means (132) connected in parallel across said fourth transient voltage suppressor device.

17. An overvoltage protection circuit as recited in claim 1 wherein said second voltage clamping means include a first bidirectional transient voltage suppressor device (136) coupled between said lines and a second bidirectional transient voltage suppressor device (142) connected to said first bidirectional transient voltage suppressor device and ground, and filter means include resistance means (14 and 16) connected in series with said lines and capacitance means (138 and 140) connected between said resistance means and said first transient voltage suppressor device (136).

18. An overvoltage protection circuit as recited in claim 17 wherein said first and second bidirectional voltage suppressor devices include a pair of unipolar voltage suppressors (146 and 150 and 158 and 162), each of said unipolar voltage suppressors connected in series with an oppositely poled diode (148, 152, 160, 164) and said series connected unipolar voltage suppressors and diodes (146, 148 and 150, 152 and 158, 160 and 162, 164) connected oppositely poled in parallel.

19. An overvoltage protection circuit as recited in claim 1 wherein said second voltage clamping means include a first diode bridge (168) coupled to said lines, a first transient voltage suppressor (182) connected between a first and second center connection of said first diode bridge and a second diode bridge (184) coupled between the second center connection of said first diode bridge and ground and a second transient voltage suppressor (186) connected between a first and second center connection of said second diode bridge, and and said filter means include resistance means (14 and 16) connected in series with said lines and capacitance means (170 and 172) connected between said resistance means and said first diode bridge and wherein said second transient voltage suppressor device has a reverse breakdown voltage above a peak value of common mode voltage signals on said lines.

## Patentansprüche

1. Überspannungsschutzschaltung für ein Paar Telefonleiter, mit
ersten Spannungskappmitteln (11; 311) zum Kappen von Spannungssignalen auf den Leitern bei einer ersten vorbestimmten Spannung oberhalb der Rufsignalspannung,
zweiten Spannungskappmitteln (22; 64; 86; 106; 134; 144; 166; 196; 318) zum Kappen von Spannungssignalen auf den Leitern bei einer zweiten vorbestimmten Spannung oberhalb der Sprach- und Datensignalspannung, jedoch unterhalb der Rufsignalspannung und
Filtermitteln (z.B. 14, 34; 16, 40) in Verbindung mit den zweiten Spannungskappmitteln zum Ausfiltern von Störungen und Übergangssignalen aus den Spannungssignalen nur dann, wenn die Spannungssignale die zweite vorbestimmte Spannung überschreiten und eine Änderungsgeschwindigkeit oberhalb derjenigen des Wechselstrom-Rufsignals besitzen,
wobei die zweiten Spannungskappmittel mindestens ein Übergangsspannungsunterdrückerelement (36, 42; 46; 80, 82; 92; 128; 142; 158, 160, 162, 164; 182; 224; 334) zwischen einer Verbindung der Leiter und Erde aufweisen,
dadurch **gekennzeichnet,** daß mindestens ein Übergangsspannungsunterdrückerelement eine Nenn-Durchbruchsspannung oberhalb eines erwarteten Spitzenwertes von asymmetrischen Spannungssignalen auf den Leitern besitzt und entsprechend ausgelegt ist, bei irgendwelchen asymmetrischen Spannungssignalen auf den Leitern in nichtleitendem Zustand zu verbleiben, um einen Stromfluß zwischen den Leitern aufgrund asymmetrischer Spannungssignale zu unterbinden.

2. Überspannungsschutzschaltung nach Anspruch 1, worin die ersten Spannungskappmittel eine Gasentladungsröhre (12) aufweisen.

3. Überspannungsschutzschaltung nach Anspruch 1, worin die ersten Spannungskappmittel ein Paar bidirektionale Halbleiter-Übergangsspannungsunterdrückerelemente (18 und 20) zwischen den Leitern aufweisen.

4. Überspannungsschutzschaltung nach Anspruch 1, worin die Filtermittel ein Paar Widerstände (14 und 16) sowie ein Paar Kondensatoren (34 und 40), einen der Widerstände in Reihe mit dem betreffenden Leiter, einen der Kondensatoren zwischen dem betreffenden Widerstand und Erde, aufweisen.

5. Überspannungsschutzschaltung nach Anspruch 1, worin die zweiten Spannungskappmittel eine mit den Leitern verbundene Diodenbrücke (23) und ein Paar Übergangsspannungsunterdrückerelemente (36 und 42) aufweisen, wobei die Übergangsspannungsunterdrückerelemente zwischen einem ersten und zweiten Mittelanschluß der Diodenbrücke und Erde liegen und die Filtermittel Widerstandsmittel (14 und 16) in Reihe zwischen den Leitern und der Diodenbrücke sowie Kondensatormittel (34 und 40) zwischen den Übergangsspannungsunterdrückerelementen und den Mittelanschlüssen der Diodenbrücke enthalten.

6. Überspannungsschutzschaltung nach Anspruch 5, worin die Übergangsspannungsunterdrückerelemente (36 und 42) aus unidirektionalen Halbleiterelementen bestehen.

7. Überspannungsschutzschaltung nach Anspruch 5, worin die zweiten Spannungskappmittel des weiteren Hochimpedanzmittel (38 und 44) in Parallelschaltung mit den Übergangsspannungsunterdrückerelementen enthalten.

8. Überspannungsschutzschaltung nach Anspruch 1, worin die zweiten Spannungskappmittel eine Diodenbrücke (66) zwischen den Leitern, ein erstes Übergangsspannungsunterdrückerelement (80) zwischen einem ersten und zweiten Mittelanschluß der Diodenbrücke sowie ein zweites Spannungsunterdrückerrelement (82) zwischen dem zweiten Mittelanschluß der Diodenbrücke und Erde und die Filtermittel Widerstandsmittel (14 und 16) in Reihe mit den Leitern sowie Kondensatormittel (68 und 70) zwischen einem entsprechenden der Widerstandsmittel und der Diodenbrücke enthalten.

9. Überspannungsschutzschaltung nach Anspruch 8, worin das zweite Übergangsspannungsunterdrückerelement (82) eine Durchbruchsspannung in Gegenrichtung oberhalb eines Spitzenwerts von asymmetrischen Spannungssignalen auf den Leitern aufweist.

10. Überspannungsschutzschaltung nach Anspruch 8, worin das erste Übergangsspannungsunterdrückerelement (80) ein unipolares Übergangsspannungsunterdrückerelement aus einer Mehrzahl in Reihe geschalteter Dioden (212, 214, 216, 218, 220, 222) und das zweite Übergangsspannungsunterdrückerelement ein bidirektionales Übergangsspannungsunterdrückerelement (224) ist.

11. Überspannungsschutzschaltung nach Anspruch 1, worin die zweiten Spannungskappmittel erste und zweite Übergangsspannungsunterdrückerelemente (88 und 90 bzw. 108 und 110) zwischen den Leitern und ein drittes Übergangsspannungsunterdrückerelement (92 bzw. 112) zwischen einer Verbindung des ersten und zweiten Übergangsspannungsunterdrückerelements und Erde und die Filtermittel Widerstandsmittel (14 und 16) in Reihe mit den Leitern sowie Kondensatormittel (94 und 96 bzw. 114 und 116) zwischen einem entsprechenden der Widerstandsmittel und den ersten und zweiten Übergangsspannungsunterdrückern aufweist.

12. Überspannungsschutzschaltung nach Anspruch 11, worin die ersten und zweiten Übergangsspannungsunterdrückerelemente (88 und 90 bzw. 108 und 110) aus unidirektionalen Halbleiterelementen und das dritte Übergangsspannungsunterdrückerelement (92) aus einem bidirektionalen Halbleiterelement bestehen.

13. Überspannungsschutzschaltung nach Anspruch 11, worin das dritte Übergangsspannungsunterdrückerelement (92) eine Durchbruchsspannung in Gegenrichtung oberhalb eines Spitzenwerts von asymmetrischen Spannungssignalen auf den Leitern aufweist.

14. Überspannungsschutzschaltung nach Anspruch 1, worin die zweiten Spannungskappmittel erste und zweite Übergangsspannungsunterdrückerelemente (108 und 110) zwischen den Leitern und ein drittes Übergangsspannungsunterdrückerelement (112) an einer Verbindung des ersten und zweiten Übergangsspannungsunterdrückerelements, eine Diodenbrücke (118) zwischen dem dritten Übergangsspannungsunterdrückerelement und Erde sowie ein viertes Übergangsspannungsunterdrückerelement (128) zwischen ersten und zweiten Mittelanschlüssen der Diodenbrücke aufweist und die Filtermittel Widerstandsmittel (14 und 16) in Reihe mit den Leitern sowie Kondensatormittel (114 und 116) zwischen den Widerstandsmitteln und den ersten und zweiten Übergangsspannungsunterdrückerelementen enthalten.

15. Überspannungsschutzschaltung nach Anspruch 14, worin die zweiten Spannungskappmittel des weiteren einen Kondensator (130) in Parallelschaltung zu dem vierten Übergangsspannungsunterdrückerelement (128) enthalten.

16. Überspannungsschutzschaltung nach Anspruch 14, worin die zweiten Spannungskappmittel des weiteren Hochimpedanzmittel (132) in Parallelschaltung zu dem vierten Übergangsspannungsunterdrückerelement aufweisen.

17. Überspannungsschutzschaltung nach Anspruch 1, worin die zweiten Spannungskappmittel ein erstes bidirektionales Übergangsspannungsunterdrückerelement (136) zwischen den Leitern sowie ein zweites bidirektionales Übergangsspannungsunterdrückerelement (142) zwischen dem ersten bidirektionalen Übergangsspannungsunterdrückerelement und Erde aufweisen und Filtermittel Widerstandsmittel (14 und 16) in Reihe mit den Leitern sowie Kondensatormittel (138 und 140) zwischen den Widerstandsmitteln und dem ersten Übergangsspannungsunterdrückerelement (136) enthalten.

18. Überspannungsschutzschaltung nach Anspruch 17, worin die ersten und zweiten bidirektionalen Spannungsunterdrückerelemente ein Paar unipolarer Spannungsunterdrücker (146 und 150 und 158 und 162) enthalten, jeder der unipolaren Spannungsunterdrücker in Reihe mit einer gegensinnig gepolten Diode (148, 152, 160, 164) geschaltet ist und die in Reihe liegenden unipolaren Spannungsunterdrücker und Dioden (146, 148 und 150, 152 und 158, 160 und 162, 164) entgegengesetzt gepolt parallelgeschaltet sind.

19. Überspannungsschutzschaltung nach Anspruch 1, worin die zweiten Spannungskappmittel eine erste Diodenbrücke (168) in Verbindung mit den Leitern, einen ersten Übergangsspannungsunterdrücker (182) zwischen einem ersten und zweiten Mittelanschluß der ersten Diodenbrücke, eine zweite Diodenbrücke (184) zwischen dem zweiten Mittelanschluß der ersten Diodenbrücke und Erde sowie einen zweiten Übergangsspannungsunterdrücker (186) zwischen einem ersten und zweiten Mittelanschluß der zweiten Diodenbrücke aufweisen und die Filtermittel Widerstandsmittel (14 und 16) in Reihe mit den Leitern sowie Kondensatormittel (170 und 172) zwischen den Widerstandsmitteln und der ersten Diodenbrücke enthalten und worin das zweite Übergangsspannungsunterdrückerelement eine Durchbruchsspannung in Gegenrichtung oberhalb eines Spitzenwerts asymmetrischer Spannungssignale auf den Leitern besitzen.

## Revendications

1. Circuit de protection contre les surtensions utilisé avec une paire de lignes téléphoniques, ce circuit comprenant :
- de premiers moyens de verrouillage de la tension (11 ; 311) pour bloquer des signaux de tension sur lesdites lignes à un premier potentiel de tension prédéterminé, situé au-dessus du niveau de tension du signal sonore ;
- de seconds moyens de verrouillage de la tension (22 ; 64 ; 86 ; 106 ; 134 ; 144 ; 166 ; 196 ; 318) pour bloquer des signaux de tension sur lesdites lignes à un second potentiel de tension prédéterminé au-dessus du niveau de tension du signal vocal et de données, mais en dessous du niveau de tension du signal sonore ; et
- des moyens de filtrage (par exemple 14, 34 ; 16, 40) combinés aves lesdits seconds moyens de verrouillage de la tension pour filtrer des signaux parasites et transitoires desdits signaux de tension seulement lorsque lesdits signaux de tension dépassent le second potentiel de tension prédéterminé et ont un taux de changement dans le temps situé au-dessus du signal sonore à courant alternatif ;
- lesdits seconds moyens de verrouillage de la tension comprenant au moins un dispositif de suppression de tensions transitoires (36, 42; 46 ; 80, 82 ; 92 ; 128 ; 142 ; 158, 160, 162, 164 ; 182 ; 224 ; 334) monté entre une liaison entre lesdites lignes et la terre,
caractérisé en ce qu'au moins un dispositif de suppression de tensions transitoires présente une tension de rupture établie au-dessus d'une valeur de pointe prévue de signaux de tension en mode commun apparaissant sur les lignes, et est réalisé pour rester à l'état non conducteur lorsque des signaux de tension en mode commun sont présents sur lesdites lignes, en vue de bloquer le flux de courant en mode commun entre lesdites lignes.

2. Circuit de protection contre les surtensions selon la revendication 1, dans lequel les premiers moyens de verrouillage de la tension comportent un tube à décharge de gaz (12).

3. Circuit de protection contre les surtensions selon la revendication 1, dans lequel les premiers moyens de verrouillage de la tension comprennent un couple de dispositifs (18 et 20) semi-conducteurs bidirectionnels de suppression de tensions transitoires monté entre lesdites lignes.

4. Circuit de protection contre les surtensions selon la revendication 1, dans lequel lesdits moyens de filtrage comprennent une paire de résistances (14 et 16) et une paire de condensateurs (34 et 40), l'une des résistances étant connectée en série avec l'une des lignes correspondantes, et l'un des condensateurs étant monté entre l'une des résistances correspondante et la terre.

5. Circuit de protection contre les surtensions selon la revendication 1, dans lequel les seconds moyens de verrouillage de la tension comprennent un pont de diodes (23) couplé auxdites lignes, et une paire de dispositifs (36 et 42) de suppression de tensions transitoires, lesdits dispositifs de suppression de tensions transitoires étant couplés entre une première et une seconde connexion centrale dudit pont de diodes et la terre, et dans lequel les moyens de filtrage comprennent des moyens de résistance (14 et 16) montés en série entre les lignes et le pont de diodes, et des moyens condensateurs (34 et 40) connectés entre les dispositifs de suppression de tensions transitoires et les connexions centrales du pont de diodes.

6. Circuit de protection contre les surtensions selon la revendication 5, dans lequel lesdits dispositifs de suppression de tensions transitoires (36 et 42) comprennent des dispositifs semi-conducteurs unidirectionnels.

7. Circuit de protection contre les surtensions selon la revendication 5, dans lequel lesdits seconds moyens de verrouillage de la tension comprennent en outre des moyens à impédance élevée (38 et 44) montés en parallèle avec lesdits dispositifs de suppression de tensions transitoires.

8. Circuit de protection contre les surtensions selon la revendication 1, dans lequel lesdits seconds moyens de verrouillage de la tension comprennent un pont de diodes (66) monté entre les lignes, un premier dispositif de suppression de tensions transitoires (80) monté entre une première et une seconde connexion centrale du pont de diodes, et un deuxième dispositif de suppression de tensions transitoires (82) monté entre la deuxième connexion centrale du pont de diodes et la terre, et dans lequel les moyens de filtrage comportent des moyens de résistance (14 et 16) montés en série avec les lignes, et des moyens condensateurs (68 et 70) montés entre l'un des moyens de résistance et le pont de diodes.

9. Circuit de protection contre les surtensions selon la revendication 8, dans lequel le second dispositif de suppression de tensions transitoires (82) présente une tension de rupture inversée située au-dessus d'une valeur de pointe de signaux de tension en mode commun apparaissant sur les lignes.

10. Circuit de protection contre les surtensions selon la revendication 8, dans lequel le premier dispositif de suppression de tensions transitoires (80) est un dispositif de suppression de tensions transitoires unipolaire formé par une pluralité de diodes connectées en série (212, 214, 216, 218, 220, 222), et dans lequel le second dispositif de suppression de tensions transitoires (82) est un dispositif bidirectionnel de suppression de tensions transitoires (224).

11. Circuit de protection contre les surtensions selon la revendication 1, dans lequel les seconds moyens de verrouillage de la tension comprennent de premiers et seconds dispositifs de suppression de tensions transitoires (88 et 90 ou 108 et 110) montés entre les lignes, et un troisième dispositif de suppression de tensions transitoires (92 ou 112) monté entre une jonction desdits premiers et deuxièmes dispositifs de suppression de tensions transitoires et la terre, et dans lequel les moyens de filtage comprennent des moyens de résistance (14 et 16) montés en série avec les lignes, et des moyens condensateurs (94 et 96 ou 114 et 116) montés entre l'un des moyens de résistance et les premiers et deuxièmes dispositifs de suppression de tensions transitoires.

12. Circuit de protection contre les surtensions selon la revendication 11, dans lequel les premiers et deuxièmes dispositifs de suppression de tensions transitoires (88 et 90 ou 108 et 110) comprennent des dispositifs semi-conducteurs unidirectionnels, et dans lequel le troisième dispositif de suppression de tensions transitoires (92) comprend un dispositif semi-conducteur bidirectionnel.

13. Circuit de protection contre les surtensions selon la revendication 11, dans lequel le troisième dispositif de suppression de tensions transitoires (92) présente une tension de rupture inversée située au-dessus d'une valeur de pointe de signaux de tension en mode commun apparaissant sur les lignes.

14. Circuit de protection contre les surtensions selon la revendication 1, dans lequel les seconds moyens de verrouillage de la tension comprennent de premiers et deuxièmes dispositifs de suppression de tensions transitoires (108 et 110) montés entre les lignes, et un troisième dispositif de suppression de tensions transitoires (112) relié à une jonction des premiers et deuxièmes dispositifs de suppression de tensions transitoires, un pont de diodes (118) monté entre ledit troisième dispositif de suppression de tensions transitoires et la terre, et un quatrième dispositif de suppression de tensions transitoires (128) connecté entre des premières et deuxièmes connexions centrales du pont de diodes, et dans lequel les moyens de filtrage comportent des moyens de résistance (14 et 16) montés en série avec les lignes, et des moyens condensateurs (114 et 116) montés entre les moyens de résistance et lesdits premiers et deuxièmes dispositifs de suppression de tensions transitoires.

15. Circuit de protection contre les surtensions selon la revendication 14, dans lequel les seconds moyens de verrouillage de la tension comprennent en outre un condensateur (130) monté en parallèle vis-à-vis du quatrième dispositif de suppression des tensions transitoires.

16. Circuit de protection contre les surtensions selon la revendication 14, dans lequel les seconds moyens de verrouillage de la tension comprennent en outre des moyens à impédance élevée (132) montés en parallèle vis-à-vis du quatrième dispositif de suppression de tensions transitoires.

17. Circuit de protection contre les surtensions selon la revendication 1, dans lequel les seconds moyens de verrouillage de la tension comprennent un premier dispositif bidirectionnel de suppression de tensions transitoires (136) monté entre les lignes, et un deuxième dispositif bidirectionnel de suppression de tensions transitoires (142) relié audit premier dispositif bidirectionnel de suppression de tensions transitoires et à la terre, et dans lequel des moyens de filtrage comportent des moyens de résistance (14 et 16) montés en série avec les lignes, et des moyens condensateurs (138 et 140) montés entre les moyens de résistance et le premier dispositif de suppression de tensions transitoires (136).

18. Circuit de protection contre les surtensions selon la revendication 17, dans lequel les premiers et deuxièmes dispositifs bidirectionnels de suppression de tensions transitoires comprennent une paire de dispositifs unipolaires de suppression de tensions (146 et 150, et 158 et 162), chacun de ces dispositifs unipolaires de suppression de tensions étant monté en série avec une diode de polarité opposée (148, 152, 160, 164), et les dispositifs unipolaires de suppression de tensions et les diodes (146, 148 et 150, 152 et 158, 160 et 162, 164) reliées en série étant montés en parallèle avec une polarité opposée.

19. Circuit de protection contre les surtensions selon la revendication 1, dans lequel les seconds moyens de verrouillage de la tension comportent un premier pont de diodes (168) relié aux lignes, un premier dispositif de suppression de tensions transitoires (182) monté entre une première et une deuxième connexion centrale du premier pont de diodes, et un deuxième pont de diodes (184) monté entre la deuxième connexion centrale du premier pont de diodes et la terre, et un deuxième dispositif de suppression de tensions transitoires (186) monté entre une première et une deuxième connexion centrale du deuxième pont de diodes, dans lequel les moyens de filtrage comprennent des moyens de résistance (14 et 16) montés en série avec les lignes, et des moyens condensateurs (170 et 172) montés entre les moyens de résistance et le premier pont de diodes, et dans lequel le deuxième dispositif de suppression de tensions transitoires présente une tension de rupture inversée située au-dessus d'une valeur de pointe de signaux de tension en mode commun apparaissant sur les lignes.
